Europäisches Patentamt

European Patent Office

Office européen des brevets

(11) Publication number: **0 160 905**
**B1**

(12) **EUROPEAN PATENT SPECIFICATION**

(45) Date of publication of patent specification: **04.11.87**

(21) Application number: **85105128.4**

(22) Date of filing: **26.04.85**

(51) Int. Cl.⁴: **B 60 Q 1/00, H 01 H 1/58**

(54) Control lever for a control device for vehicle signalling and/or operating devices.

(30) Priority: **02.05.84 IT 6744084**

(43) Date of publication of application:
**13.11.85 Bulletin 85/46**

(45) Publication of the grant of the patent:
**04.11.87 Bulletin 87/45**

(84) Designated Contracting States:
**DE FR GB SE**

(56) References cited:
**DE-A-2 835 256**

(73) Proprietor: **FIAT AUTO S.p.A.**
**Corso Giovanni Agnelli 200**
**I-10135 Torino (IT)**

(72) Inventor: **Recluta, Franco**
**Via Osasco 30**
**I-10100 Torino (IT)**
Inventor: **Contato, Ugo**
**Corso Siracusa 128**
**I-10100 Torino (IT)**

(74) Representative: **Prato, Roberto et ai**
**c/o Ingg. Carlo e Mario Torta Via Viotti 9**
**I-10121 Torino (IT)**

Courier Press, Leamington Spa, England.

# Description

This invention relates to a control lever for a control device for vehicle signalling and/or operating devices, and in particular arranged to carry on itself at least part of the control switches normally disposed on the vehicle instrument panel.

Vehicle signalling and/or operating devices such as the side position lights, the direction indicators, the emergency lights etc. are currently controlled partly by suitable control levers disposed on the steering column so that they project radially from the side thereof, and partly by switches provided with control pushbuttons disposed on the vehicle instrument panel. Such an arrangement of the devices for controlling the various vehicle electrical members has the double drawback of making the wiring of the electric cables connected to the control devices relatively lengthy and costly, and of being poorly ergonometric in that the control devices are dispersed around the vehicle driving position, so that it can be difficult for the user to reach said control devices easily and in good time. It is also apparent that simply transferring the control pushbuttons of the various electrical devices from the instrument panel to another position, for example on to one or more of said control levers, would make said levers substantially inoperable. For instance DE—A—2 835 256 taught a control lever having a sliding button, controlling a respective switch provided thereon. The sliding button has a large bulk and is not aesthetic furthermore it requires the lever to be enlarged for housing the switch components; it is evident that such an enlargement of the control lever can be actuated correspondence with the end of the lever only, an enlargement of the whole lever, e.g. for housing more than one button, resulting in a hard difficult to manoeuvre the same. Finally, the solution taught by DE—A—2 835 256 is not ergonomic, the operation of the sliding buttons requiring a certain stability of the element provided on the same; in the majority of cases, therefore, a user should hold firmly the lever and simultaneously operating the button in order to avoid an accidental displacement of the lever too, together with that of the button. The large bulk of the construction shown by DE—A—2 835 256 however allows only one button to be provided on each lever, and therefore such a construction does not solve the aforementioned problems; some operating buttons, in fact, would remain on the instrument panel for lack of space on the levers.

An object of the present invention is to provide a control lever for a control device for vehicle signalling and/or operating devices which is arranged to control those operating switches for one or more vehicle electrical devices normally disposed on the vehicle instrument panel, while at the same time remaining of reduced bulk and properly operable as a lever. A further object of the present invention is to provide a control lever of the aforesaid type which is of simple and economical construction and of particularly rapid and simple mounting and demounting, in order to facilitate both the production and maintenance of vehicles provided with said control lever.

With respect to DE—A—2 835 256 which discloses a control lever for a control device for vehicle signalling and/or operating devices, comprising an internally hollow cylindrical body open at a first end, a first printed circuit housed inside said body and carrying at a first end a plurality of cables for connection to the vehicle electrical circuit, and means for closing said first end of the hollow body, the present invention is characterized in that said control lever further comprises at least one first switch, which is provided with a fixed contact board carried by a second printed circuit disposed substantially orthogonal to said first printed circuit, and which is rigidly fixed to this latter by way of said printed circuit, means for enabling said first printed circuit to be bayonet-fitted into said body when said switch has already been rigidly premounted on this latter, and at least one ring mounted idly on the outside of said body and arranged to control the switching of said switch; said hollow body being provided at a second end, namely the opposite end to the first, with a connection element formed integrally with said body and arranged to be hinged into a control box which supports said lever.

The present invention will be more apparent from the non-limiting description of one embodiment thereof given hereinafter with reference to the accompanying drawings, in which:

Figure 1 is a longitudinal view of a control lever constructed in accordance with the present invention;

Figure 2 is a longitudinal section through the control lever of Figure 1, to an enlarged scale;

Figure 3 is a plan view to an enlarged scale of one of the components of the control lever according to the invention; and

Figures 4 to 8 are respective sections on the lines IV—IV, V—V, VI—VI, VII—VII and VIII—VIII of the lever of Figure 2.

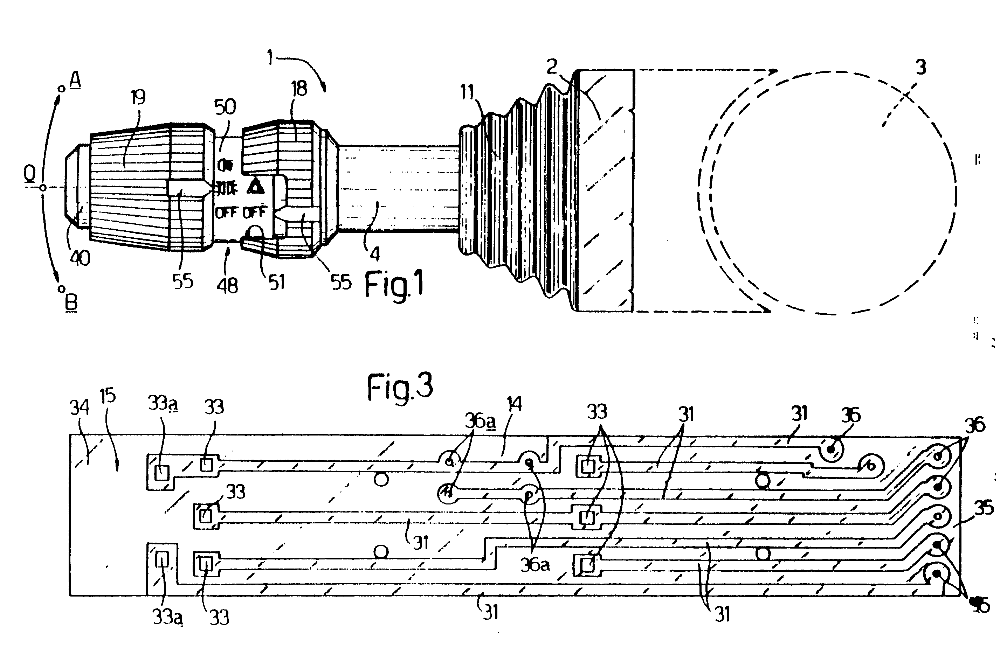

In Figure 1, the reference numeral 1 indicates overall a control lever suitable for use on any control device of any known type for the signalling and/or operating devices of a vehicle, for example a motor vehicle, of any known type, not shown for simplicity. In particular, the lever 1 is arranged for connection to a control box 2 to be connected in its turn to the side of the steering column 3 of said vehicle, and is arranged for rotation in the direction of the arrows relative to the box 2, to which it is hinged in known manner, in order in known manner to switch suitable control switches disposed in said box 2 and operating for example the vehicle direction indicators or vehicle windscreen and rear window wipers. In particular, according to the absolutely non-limiting example described hereinafter, the lever 1 is a control lever for the direction indicators, which are activated by rotating said lever relative to the box 2 from the position indicated by O to the positions indicated by A and B, and the box 2 contains internally a steering change release device of any known type, not shown for simplicity, and which can also be provided inside the steering column 3 itself.

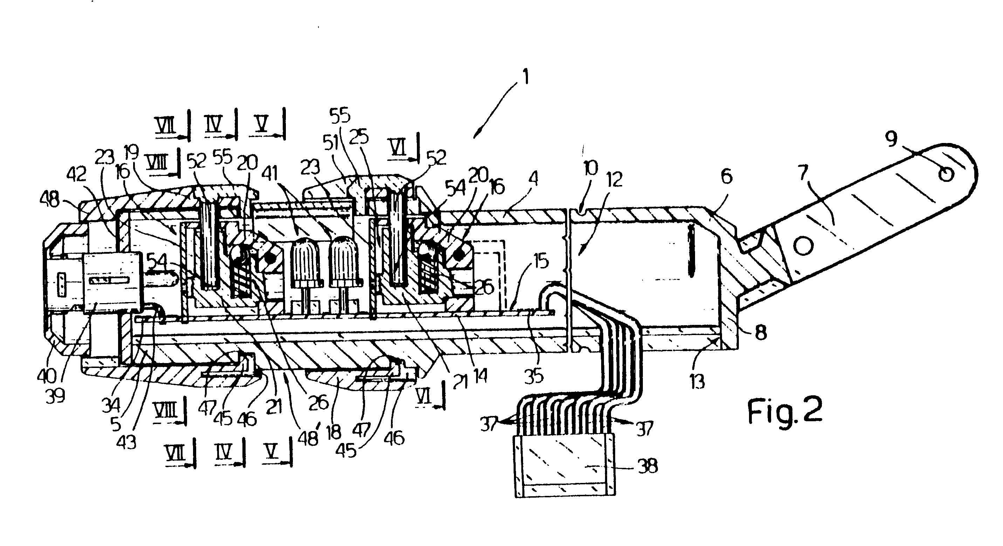

With reference also to Figure 2, the lever 1 comprises an internally hollow cylindrical body 4 of substantially tubular shape open at one of its ends 5, and a connection element 7 formed integrally with the body 4 at that end 6 of this latter which is opposite to the end 5, and which is closed by an end wall 8. The connection element 7 is substantially of lug configuration and is provided with hinging means 9 for hinging into said control box 2, which is arranged in its turn to support the lever 1 overall, and the body 4 is preferably constructed of a plastics material by a suitable moulding operation. The end 6 is preferably also provided with a connection groove 10 for a protection bellows 11 designed to cover the end 6.

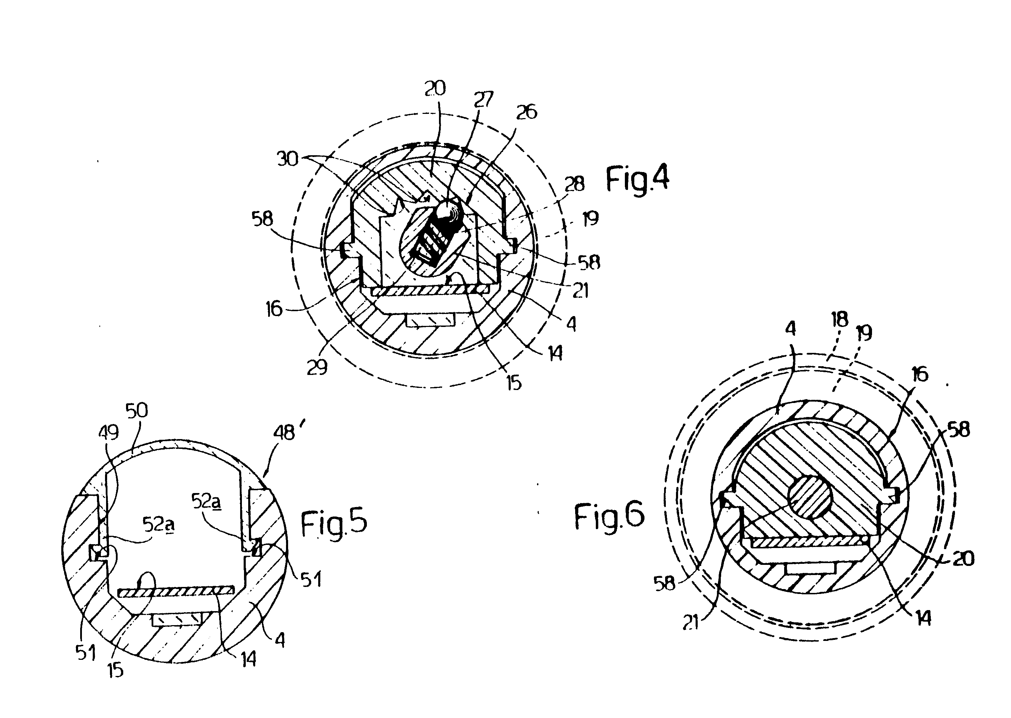

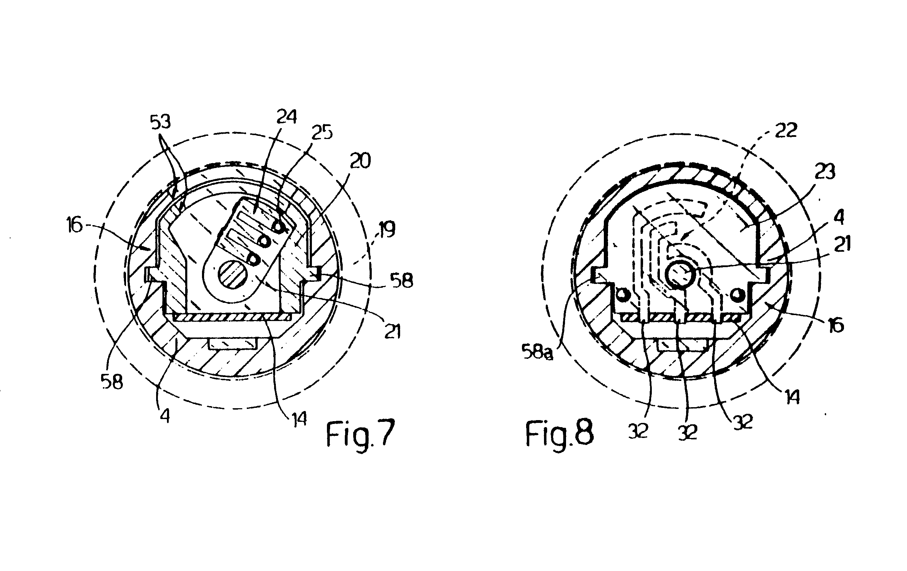

According to the invention, the body 4 of the lever 1 internally defines a chamber 12 accessible from the outside, respectively through said open end 5 thereof and through a through aperture 13 provided through said body 5 at the end 6. A printed circuit 14, one embodiment of which can be seen in Figure 3, is housed in the chamber 12 and carries rigidly fixed on its upper face 15 a pair of switches 16, which are also housed in the chamber 12 and are disposed in an axial position corresponding to respective control rings 18 and 19 idly mounted on the outside of the body 4 and arranged, on rotation, to operate the switches 16. These latter each comprise, with reference also to Figures 4, 6, 7 and 8, a casing 20 preferably of plastics construction, a rotatable drum 21 idly housed in the casing 20, a fixed contact board 22 (Figure 8) carried by a corresponding respective printed circuit 23 forming part of the switch 16 and disposed substantially orthogonal to the printed circuit 14, a multiple sliding contact 24 (Figure 7) carried angularly rigid by the drum 21 on that face 25 thereof which faces the corresponding printed circuit 23, and a position indicating device 26 (Figure 4) substantially of known type and comprising a ball 27 housed, mobile against the action of a spring 28, in a seat 29 provided radially in the drum 21 and a plurality of side-by-side cavities 30 provided in the inner surface of the casing 20 in determined angular positions to be selectively snap-engaged by the ball 27 under the thrust of the spring 28 in order to selectively halt the drum 21 in a plurality of different angular positions corresponding to the various seats 30. The casing 20 is substantially of cup configuration and is closed lowerly by the printed circuit 14, against the upper surface 15 of which it rests, and is closed at one end by the corresponding printed circuit 23 which is fixed in any convenient manner to the casing 20 and together with this latter supports the drum 21. The sliding contact 24 is arranged to slidably cooperate with the contact board provided on that surface of the printed circuit 23 which faces the surface 25 of the drum 21, in such a manner as to make or break, according to the angular position of said drum 21 on the printed circuit 23, one or more electrical circuits defined by the fixed contact board 22, which are electrically connected to corresponding conducting tracks 31 (Figure 3) carried by the surface 15 of the printed circuit 14, to which the printed circuits 23 of the switches 16 are rigidly fixed by respective connectors 32 (Figure 8) which are inserted and soldered into suitable seats 33 of the printed circuit 14. This latter comprises two respective opposing ends 34 and 35 respectively, which are disposed adjacent to the corresponding ends 5 and 6 of the body 4 containing the printed circuit 14, and at the end 35 is provided with corresponding connection points 36 for corresponding electric cables 37 (Figure 2) for connection to the vehicle electrical circuit and which leave the chamber 12 through the aperture 13. The cables 37 are preferably soldered to the corresponding connection points 36, to which the respective conducting tracks 31 are connected, and converge at their free ends preferably into an electrical connector 38 of any known type. The aperture 13 is of such dimensions, according to the invention, as to enable it to be traversed by said connector 38, so that it is possible to slidably insert the printed circuit 14 into the body 4 after the cables 37 and switches 16 have been premounted and fixed rigidly thereto, so that the connector 38 emerges through the aperture 13, the end 5 being closed by suitable closure means in order to lock inside the body 4 the printed circuit 14 with all the elements carried thereby, so allowing extremely simple and rapid assembly of the entire electrical part of the lever 1. As shown in Figure 2, the printed circuit 14 can have fixed and premounted on it not only the switches 16, by way of their respective printed circuits 23, and the cables 37, but also a further respective press switch 39 complete with a respective control pushbutton 40 snap-mounted in known manner on to the switch 39, and one or more illumination devices 41 of LED or equivalent type. In particular, the switch 39 is rigidly carried by a cover 42 arranged to close the end 5 and be fixed rigidly thereto, and is also rigidly fixed to the printed circuit 14 by respective connection pins 43 connected and soldered to respective connection seats 33a at the end 34, whereas the illumination LEDs 41 are disposed in the space between the pair of side-by-side switches 16 and are fixed to the printed circuit 14 by means of their connection feet at respective connection points 36a on this latter circuit. Obviously all said connection points 36, 36a, 33 and 33a are connected together in suitable manner by means of the conducting tracks 31, so as to define on the surface 15 of the printed circuit 14 a suitable electrical contact circuit which on operation of the switches 16 and 39 is able to cause the LEDs 41 to light and, more generally, to electrically connect the cables 37 together in order to either switch on or switch off the various electrical devices of the vehicle on which the lever 1 can be mounted and which are controllable by said lever 1.

According to the invention, the rings 18 and 19 are able to slidably engage the body 4, so as to be able to be mounted thereon by starting from the end 5 and moving them towards the corresponding end 6, and are provided with corresponding elastic teeth 45 provided in respective suitable radially internal cavities 46 of the rings 18 and 19 and arranged to snap-engage in corresponding outer grooves 47 in the body 4 which are provided in determined axial positions thereon in order to axially but removably lock the rings 18 and 19 thereon in determined axial positions corresponding to the axial positions which the underlying switches 16 carried by the printed circuit 14 assume when this latter is inserted into the body 4. The rings 18 and 19 are both substantially of sleeve configuration, the ring 19 being mounted on the body 4 at the end 5 and comprising a terminal collar-shaped portion 48 which projects from the body 4 to define a slide seat for the pushbutton 40 of the switch 39. The ring 18 is disposed to the side of the ring 19 on that side thereof facing the end 6 and at a predetermined distance therefrom, to define on the body 4, together with this latter end, an annular portion 48' provided with a through aperture 49 closed by a transparent panel 50 snap-fitted into corresponding axial grooves 51, provided in the inner surface of the body 4, by means of its respective elastic lugs 52a. According to the invention, the aperture 49 is provided in a position corresponding with the illumination LEDs 41 carried by the underlying printed circuit 14, and the transparent panel 50 is provided with suitable diagrams, shown in Figure 1, the function of which is to identify which devices are controlled by the operation of the switches 16. In order to enable the lever 1 to be made more compact, the control pushbutton 40 is disposed substantially coaxially to and projecting from the body 4, and substantially housed in the collar portion 48 of the ring 19, and the ring 18 is provided with a window 51, which allows observation of that portion of the transparent panel 50 provided with said diagrams even with the rings 18 and 19 disposed relatively close together. These latter operate the corresponding underlying switches 16 contained in the body 4, by being fixed angularly rigid with the corresponding drums 21 of the switches 16 by means of respective pins 52 which radially traverse the rings 18 and 19 and corresponding circumferential slots 53 provided through the body 4 and the underlying casings 20 of the switches 16, and are then inserted into corresponding radial bores 54 in the drums 21. Preferably, the pins 52 are formed integrally with respective pointers 55 of transparent material construction which are carried in suitable seats in the rings 18 and 19 in positions corresponding with the panel 50, and become illuminated, together with this latter, when the LEDs 41 are lit.

Finally according to the invention, the casings 20 of the switches 16 are provided laterally with respective longitudinal projections 58 arranged to slidably engage in the longitudinal grooves 51 on the body 4, together with corresponding projections 58a on the printed circuits 23. In this manner, as these latter and the casings 20 are fixed rigidly to the printed circuit 14, this can be bayonet-fitted into the body 4 by inserting the projections 58 and 58a into the grooves 51 and then urging the printed circuit 14 towards the end 6 until the cover 42, which has been previously fixed thereto together with the switch 39, abuts against the end 5.

The ease with which the lever 1 according to the invention is constructed and mounted are apparent from the description, as is its operation. The body 4, in a like manner to any control lever of known type, can be fixed on to the box 2 or directly on to the steering column 3, for example rigid with a suitable steering change release device for the vehicle, by means of the connection element or lug 7, which is entirely identical to that of known levers, and consequently the body 4 can undergo all the movements normally carried out by control levers of known type to operate the appropriate devices which are disposed in the box 2 in known manner, not shown for simplicity. Once the body 4 has been installed on the vehicle, analogously to any control lever of known type, the entire electrical part can be inserted into it by a single operation as heretofore described, by firstly premounting the electrical part on the printed circuit 14 by fixing to its surface 15 the LEDs 41, the switches 16, the cables 37 and the switch 39 with its cover 42, and then bayonet-inserting the printed circuit 14 into the chamber 12 by utilising the grooves 51 and projections 58. At this point the chamber 12 is closed by the cover 42, and the entire electrical part of the lever 1 is disposed inside said chamber 12, with the cables 37 and connector 38 hanging outside the aperture 13. Thus at this point, the connector 38 can be connected to the vehicle electrical circuit and the connector and the aperture 13 then be completely covered with the protection bellows 11. Finally, firstly the ring 18 and then the ring 19 are mounted on the body 4 by snapping their teeth 45 into the grooves 47, and the pushbutton 40 is mounted on the switch 39 in order to close the collar portion 48. The pointers 55 are then mounted on the rings 18 and 19 by passing their pins 52 through said slots 53 and inserting them into the bores 54, to thus angularly connect the rings 18 and 19 to the drums 21 of the switches 16. It is consequently apparent that the user can operate the devices housed in the box 2 by simply manipulating the body 4 which on being subjected to manual pressure by the user rotates on the lug or element 7, in known manner, for example in order to operate said steering change release device of the vehicle. Again, in order to operate the other vehicle electrical devices, for example the side position lights, the dipped headlights and the emergency lights, the user has only to operate either the pushbutton 40 or one of the two rings 18 and 19 by pressing the former or rotating the latter in the required direction, to thus cause switching of the switches 39 or 16, with consequent activation of the selected devices. When the side position lights are lit, the LEDs 41 will also be activated to illuminate the transparent panel 50 and pointers 55, thus enabling the user to perfectly determine the angular position of the rings 18 and 19, and thus the switching state of the switches controlled thereby, and also allowing him to see the diagrams which indicate which devices are controlled by said switches. Should a fault arise, it is also apparent that the lever 1 according to the invention can be removed by firstly extracting the pointers 55, then the rings 18 and 19, and finally the pushbutton 40 and printed circuit 14 after disconnecting the connector 38.

## Claims

1. A control lever (1) for a control device for vehicle signalling and/or operating devices, comprising an internally hollow cylindrical body (4) open at a first end (5), a first printed circuit (14) housed inside said body (4) and carrying at a first end (35) a plurality of cables (37) for connection to the vehicle electrical circuit and means (42) for closing said first end of the hollow body (4), characterized in that it further comprises at least one first switch (16), which is provided with a fixed contact board (22) carried by a second printed circuit (23) disposed substantially orthogonally to said first printed circuit (14), and which is rigidly fixed to this latter by way of said second printed circuit (23), means (51, 58) for enabling said first printed circuit (14) to be bayonet-fitted into said body (4) when said switch (16) has already been rigidly premounted on this latter, and at least one ring (18, 19) mounted idly on the outside of said body (4) and arranged to control the switching of said switch (16); said hollow body (5) being provided at a second end (6), namely the opposite end to the first, with a connection element (7) formed integrally with said body (4) and arranged to be hinged into a control box (2) which supports said lever (1).

2. A control lever (1) as claimed in claim 1, characterised in that said first end (35) of said first printed circuit (14) is disposed adjacent to said second end (6) of said cylindrical body (4), this latter end being provided with a through aperture (13) through which said cables (37) emerge from said body (4), said aperture (13) being of such dimensions as to be able to be traversed by an electrical connector (38) into which the free ends of said cables (37) converge.

3. A control lever (1) as claimed in claim 1 or 2, characterised in that said means for closing said first end (5) of said body (4) comprise a cover (42), a second switch (39) carried rigidly by said cover (42) and electrically connected to the second end (34) of said first printed circuit (14), and a control pushbutton (40) for said second switch (39), said pushbutton (40) being snap-mounted on this latter and disposed coaxially to and projecting from said cylindrical body (4).

4. A control lever (1) as claimed in claim 3, characterised by comprising a pair of said rings (18, 19), each controlling the switching of a respective first switch (16), a first of said rings (19) being mounted on said body (14) at said first end (5) thereof and comprising a terminal collar portion (48) disposed projecting from said body (4) and arranged to define a slide seat for said pushbutton (40), the second of said rings (18) being disposed to the side of the first ring (19) at a predetermined distance (48') therefrom.

5. A control lever (1) as claimed in claim 4, characterised in that said first printed circuit (14) carries, in a position corresponding with the axial position of each of said rings (18, 19), the corresponding first switch (16), which comprises a casing (20) closed at one end by the corresponding said second printed circuit (23), a rotating drum (21) disposed inside said casing (20) and provided with stop means (26) of snap type for selectively positioning said drum (21) in a plurality of different angular positions, and a multiple sliding contact (24) carried by said drum (21) and arranged to cooperate with said fixed contact board (22) of the second printed circuit (23); said rings (18, 19) being provided with transmission means (52) for causing said drums (21) of the first switches (16) to rotate as a result of the rotation of said rings (18, 19).

6. A control lever (1) as claimed in claim 5, characterised in that said body (4) is provided, between said first and second rings (18, 19), with a through aperture (49) closed by a transparent panel (50), said first printed circuit (14) carrying in a position underlying said transparent panel (50) at least one illumination LED (41) disposed between said corresponding first switches (16).

7. A control lever (1) as claimed in claim 6, characterised in that each of said rings (18, 19) is provided, in a position corresponding with said transparent panel (50), with a seat for housing a pointer (55) which is also of transparent material construction and becomes illuminated as a consequence of the lighting of said LED (41), said pointer (55) being provided with a pin (52) which radially traverses said ring (18, 19) and a corresponding slot (53) in said body (4) in order to become inserted into a corresponding bore (54) in the underlying drum of said corresponding first switch (16), so as to make said drum (21) angularly rigid with said ring (18, 19).

8. A control lever (1) as claimed in any one of the preceding claims, characterised in that said means for bayonet-fitting said first printed circuit (14) comprise at least one pair of axial grooves (51) and a pair of corresponding projections (58) arranged to slidably engage in these latter, the former pair being provided in the inner surface of said hollow cylindrical body (4) and the latter pair being provided on at least one of said first switches (16) carried rigidly by said first printed circuit (14).

9. A control lever (1) as claimed in any one of the preceding claims, characterised in that said ring (18, 19) is provided with an elastic tooth (45) which can snap-engage with a corresponding outer groove (46) on said body (4) in order to axially but demountably lock said ring on to said body (4).

**Patentansprüche**

1. Schalthebel (1) einer Steuervorrichtung für Anzeige-und/oder Schaltvorrichtungen an Fahrzeugen, bestehend aus einem an einem Ende (15) offenen zylinderförmigen Hohlkörper (4), einer ersten im Körper (4) befindlichen gedruckten Schaltung (14) und mit am ersten Ende (35) eine Anzahl von Kabeln (37) zum Anschluss an den elektrischen Steuerkreis des Fahrzeugs, sowie Mittel (42) zum Verschluss des ersten Endes des Hohlkörpers (4), dadurch gekennzeichnet dass dieser ausserdem mindestens einen ersten Schalter (16) enthält, welcher eine von einer zweiten gedruckten Schaltung (23) getragene feste Kontaktplatte (12) besitzt, die rechtwinklig zur ersten gedruckten Schaltung (14) angebracht und mit dieser mittels der zweiten Schaltung (23) an letztere starr verbunden ist, sowie Mittel (51, 58) um die erste Schaltung (14) durch Bajonettverschluss an den Körper (4) zu befestigen, nachdem der Schalter (16) schon auf dieser fest vormontiert ist, sowie mindestens einen mit Leerlauf aussen auf dem Körper (4) montierten Ring (18, 19) zur Kontrolle der Schaltbewegungen des Schalters (16), wobei dieser Hohlkörper (4) an seinem zweiten d.h. dem ersten Ende gegenüberliegenden Ende (6), ein einstückig an den Körper (4) angeformtes Verbindungselement (7) aufweist und so vorgesehen, dass es in einem Schaltgehäuse (2) in welcham sich der Schalthebel (1) befindet, einklappbar ist.

2. Schalthebel (1) nach Anspruch 1, dadurch gekennzeichnet dass das erste Ende (35) der ersten Schaltung (14) sich neben dem zweiten Ende des cylinderförmigen Körpers (4) befindet, wobei dieser eine durchgehende Öffnung (13) aufweist, durch welche die Kabel (37) aus dem Körper (4) hervorragen und wo die Öffnung (13) so bemessen ist, dass sie von einem elektrischen Leiter (38) durchlaufen wird, in den die freien Enden der Kabel (37) einlaufen.

3. Schalthebel (1) nach Anspruch 1 bzw. 2, dadurch gekennzeichnet dass die Mittel zum Verschluss des ersten Endes (5) des Körpers (4) einen Deckel (42), einen vom Deckel (42) fest abgestützten und elektrisch an das zweite Ende (34) der ersten Schaltung (14) angeschlossenen zweiten Schalter (39), sowie eine Schalttaste (40) für den zweiten Schalter (39) aufweisen, wobei die Schalttaste (40) in den Schalter (39) einschnappbar und koaxial sowie aus dem zylinderförmigen Körper (4) hervorstehend montiert ist.

4. Schalthebel (1) nach Anspruch 3, dadurch gekennzeichnet dass dieser ein Paar Ringe (18, 19) aufweist, von denen jeder einen entsprechenden ersten Schalter (16) steuert, wo der erste Ring (19) am ersten Ende (5) des Körpers (4) montiert ist und ein vom Körper (4) hervorstehendes Bundenteil (48) umfasst, um einen Gleitsitz für den Schalter (40) herzustellen, wo der zweite Ring (18) neben dem ersten Ring (19) mit einem vorgegebenen Abstand (48') angebracht ist.

5. Schalthebel (1) nach Anspruch 4, dadurch gekennzeichnet dass die erste Schaltung (14) in einer der axialen Lage jedes der Ringe (18, 19) entsprechenden Stellung den esten Schalter (16) trägt, welcher eine an einem Ende der zweiten Schaltung (23) geschlossene Umhüllung (20), eine rotierende Trommel (21) mit in verschiedene Winkelstellungen einschnappenden Arretiermitteln (26), sowie einen von der Trommel getragenen Mehrfachgleitkontakt (24) aufweist, um mit der festen Kontaktplatte (22) der zweiten Schaltung (23) zusammenzuarbeiten, während die Ringe (18, 19) Übetragungsmittel (32) besitzen, damit sich die Trommeln (21) der ersten Schaltung (16) aufgrund der Rotation der Ringe (18, 19) mitdrehen.

6. Schalthebel (1) nach Anspruch 5, dadurch gekennzeichnet dass der Körper (4) zwischen dem ersten und zweiten Ring (18, 19) eine von einer durchsichtigen Platte (50) verschlossene durchgehende Öffnung (49) aufweist, wo die erste Schaltung (14) in eine Stellung unterhalb der durchssichtigen Platte (50) mindestens eine zwischen den entsprechenden esten Schaltungen (16) gelagerte lichtemittierende Diode (41) (LED) besitzt.

7. Schalthebel (1) nach Anspruch 6, dadurch gekennzeichnet dass jeder der Ringe (18, 19) in einer entsprechenden Stellung gegenüber der durchsichtigen Platte (50) einen Sitz zur Aufnahme eines ebenfalls aus durchsichtigem Material bestehenden Zeigers (55) aufweist, welcher dank der lichtemettierenden Diode (41) auch aufleuchtet, wobei der Zeiger (55) einen radial durch den Ring (18, 19) laufenden Stift (52) sowie einen entsprechenden Schlitz (53) im Körper (4) aufweist, um in eine entsprechende Bohrung (54) in die darunter befindliche Trommel des ersten Schalters (16) so hineinzulaufen, dass die Trommel (21) mit dem Ring (18, 19) winklig steif verbunden ist.

8. Schalthebel (1) nach irgendeinem der vorhergehenden Ansprüche, dadurch gekennzeichnet, dass die Mittel für den Bajonettverschluss der ersten Schaltung (14) ein Paar Axialnuten (51) und ein Paar entsprechende Vorsprünge (58) aufweisen die so vorgesehen sind, dass sie gleitend in diese hineinlaugen, wo das erste Paar an der Innenfläche des Hohlkörpers (4) und das zweite Paar mindestens an einem der ersten Schalter (16) vorgesehen sind, die starr von der ersten Schaltung getragen werden.

9. Schalthebel (1) nach irgendeiner der vorhergehenden Ansprüche, dadurch gekennzeichnet dass der Ring (18, 19) einen federnden Zahn (45) besitzt, welcher in eine entsprechende äussere Nut (45) auf dem Körper (4) so einrastet, dass der Ring (18, 19) axial, jedoch abnehmbar auf dem Körper (4) festgeklemmt wird.

**Revendications**

1. Levier de commande (1) pour un dispositif de commande pour des dispositifs de signalisation et/ou d'actionnement pour véhicule, comprenant un corps cylindrique intérieurement creux (4) ouvert à une première extrémité (5), un premier circuit imprimé (14) logé à l'intérieur du corps (4) et portant, à une première extrémité (35), une multiplicité de câbles (37) pour leur raccordement au circuit électrique du véhicule, et des moyens (42) pour fermer cette première extrémité du corps creux (4), caractérisé en ce qu'il comporte en outre au moins un premier interrupteur (16), équipé d'une carte de contacts fixes (22) portée par un deuxième circuit imprimé (23) pratiquement perpendiculaire au premier circuit imprimé (14), et rigidement fixé sur ce dernier au moyen du deuxième circuit imprimé (23), des moyens (51, 58) pour permettre de fixer par montage baïonnette le premier circuit imprimé (14) dans le corps (4) lorsque l'interrupteur (16) a déjà été solidarisé au préalable de ce dernier, et au moins une bague (18, 19) montée, folle, sur l'extérieur du corps (4) et agencée pour commander la commutation de l'interrupteur (16), ce corps creux (5) comportant à une deuxième extrémité (6), à savoir l'extrémité opposée à la première, un élément de raccordement (7) formé d'une seule pièce avec le corps (4) et agencé pour être articulé dans un boîtier de commande (2) qui supporte le levier (1).

2. Levier de commande (1) selon la revendication 1, caractérisé en ce que la première extrémité (35) du premier circuit imprimé (14) est adjacente à la deuxième extrémité (6) du corps cylindrique (4), cette dernière extrémité comportant une ouverture traversante (13), à travers laquelle les câbles (37) sortent du corps (4), cette ouverture (13) ayant des dimensions lui pemettant d'être traversée par un connecteur électrique (38) dans lequel convergent les extrémités libres des câbles (37).

3. Levier de commande selon la revendication 1 ou 2, caractérisé en ce que les moyens pour fermer la première extrémité (5) du corps (4) comporte un couvercle (42), un deuxième interrupteur (39) porté rigidement par ce couvercle (42) et électriquement raccordé à la deuxième extrémité (34) du premier circuit imprimé (14), et un bouton-poussoir de commande (40) pour ce deuxième interrupteur (39), ce bouton-poussoir (40) étant encliqueté sur ce dernier et disposé coaxialement au corps cylindrique (4) et en dépassant.

4. Levier de commande (1) selon la revendication 3, caractérisé en ce qu'il comprend deux bagues (18, 19) commandant chacune la commutation d'un premier interrupteur respectif (16), la première de ces bagues (19) étant montée sur le corps (14) au niveau de la première extrémité (5) du corps et comportant une portion de collier terminal (48) dépassant au-delà du corps (4) et agencée pour définir un siège coulissant pour le bouton-poussoir (40), la deuxième de ces bagues (18) étant disposée sur le côté de la première bague (19) à une distance prédéterminée (48') de celle-ci.

5. Levier de commande (1) selon la revendication 4, caractérisé en ce que le premier circuit imprimé (14) porte, dans une position correspondant à la position axiale de chacune de ces bagues (18, 19), le premier interrupteur correspodant (16), qui comprend un boîtier (20) fermé à une extrémité par le deuxième circuit imprimé correspondant (23), un rotor (21) disposé à l'intérieur du boîtier (20) et équipé de moyens d'arrêt (26) pouvant être encliquetés pour positionner sélectivement ce rotor (21) dans une multiplicité de positions angulaires différentes, et un contact glissant multiple (24) porté par le rotor (21) et agencé pour coopérer avec la carte de contacts fixes (22) du deuxième circuit imprimé (23), ces bagues (18, 19) comportant des moyens de transmission (52) pour faire tourner les rotors (21) des premiers interrupteurs (16) lors de la rotation de ces bagues (18, 19).

6. Levier de commande (1) selon la revendication 5, caractérisé en ce que le corps (4) comporte, entre la première bague (19) et la deuxième bague (18), une ouverture traversante (49) fermée par un panneau transparent (50), le premier circuit imprimé (14) portant dans une position située en-dessous du panneau transparent (50) au moins une DEL d'éclairage (41) disposée entre les premiers interrupteurs correspondants (16).

7. Levier de commande (1) selon la revendication 6, caractérisé en ce que chacune des bagues (18, 19) comporte, dans une position correspondant au panneau transparent (50), un siège pour loger un index (55), également en matière transparente et s'éclairant à la suite de l'éclairage de la DEL (41), cet index (55) étant équipé d'une broche (52) qui traverse radialement la bague (18, 19) et une fente correspondant (53) dans le corps (4) afin de pouvoir être introduite dans un alésage correspondant (54) dans le rotor sous-jacent du premier interrupteur correspondant (16) de façon à solidariser angulairement le rotor (21) de la bague (18, 19).

8. Levier de commande (1) selon l'une quelconque des revendications précédentes, caractérisé en ce que les moyens pour monter par baïonnette le premier circuit imprimé (14) comportent au moins deux rainures axiales (51) et deux saillies correspondantes (58) agencées pour coopérer par coulissement avec ces rainures, ces dernières étant prévues dans la surface intérieure du corps cylindrique creux (4) et les saillies étant prévues sur au moins l'un des premiers interrupteurs (16) solidarisé du premier circuit imprimé (14).

9. Levier de commande (1) selon l'une quelconque des revendications précédentes, caractérisé en ce que la bague (18, 19) présente une dent élastique (45) qui peut coopérer par encliquetage avec une gorge extérieure correspondante (46) sur le corps (4) de façon à verrouiller axialement, quoi que de façon amovible, la bague sur le corps (4).

Fig.1

Fig.3

Fig. 2

0 160 905

Fig.4

Fig.5

Fig.6

Fig.7

Fig.8